# EUROPÄISCHE PATENTSCHRIFT

(11) **EP 1 839 816 B1**
(45) Veröffentlichungstag und Bekanntmachung des Hinweises auf die Patenterteilung: **27.02.2013**
(21) Anmeldenummer: 07104480.4
(22) Anmeldetag: 20.03.2007
(51) Int. Cl.: B25C 1/06, B25C 5/15, F16F 1/366

(54) **Handgeführtes Eintreibgerät**
Hand-held fastener driving device
Dispositif d'enfoncement manuel

(30) Priorität: 28.03.2006 DE 102006000139
(43) Veröffentlichungstag der Anmeldung: 03.10.2007
(73) Patentinhaber: HILTI Aktiengesellschaft, 9494 Schaan (LI)
(72) Erfinder: Schiestl, Ulrich, 6800 Feldkirch (AT); Odoni, Walter, 9498 Planken (LI); Dittrich, Tilo, 9473 Gams (CH)
(74) Vertreter: Wildi, Roland

(56) Entgegenhaltungen:
- EP-A- 0 454 983
- DE-A1- 4 013 022
- JP-A- 2 072 232
- US-A- 3 682 466
- US-A- 4 260 143
- US-A- 6 068 250
- US-A1- 2005 082 334
- US-B1- 6 708 585

## Beschreibung

Die vorliegende Erfindung betrifft ein handgeführtes Eintreibgerät der im Oberbegriff von Patentanspruch 1 genannten Art. Derartige handgeführte Eintreibgeräte verfügen über einen versetzbar geführten Eintreibstössel über den Befestigungselemente in einen Untergrund eintreibbar sind.

Als Antriebsquelle für den Eintreibstössel dient dabei eine mechanische Antriebsfeder, die über einen Spannmechanismus spannbar ist. Von Vorteil ist dabei, dass die mechanische Antriebsfeder kostengünstig ist, wodurch ein derartiges Eintreibgerät preiswert herzustellen ist. Ferner haben mechanische Federn gegenüber Gasfedern den Vorteil, dass es beim Spannen der mechanischen Feder nicht wie bei Gasfedern zu Temperaturerhöhungen kommt, sowie dass eine gespannte Feder die gespeicherte Energie über lange Zeit nicht verliert, während bei einer Gasfeder die Energie durch Leckage allmählich verloren geht.

Dagegen haben mechanische Federn gegenüber Gasfedern den Nachteil, dass sie bei schneller Entspannung einen beträchtlichen Teil der in der Feder gespeicherten Energie verlieren, da diese zum Beschleunigen der eigenen Federmasse aufgewendet werden muss. Da die Masse einer mechanischen Feder viel grösser ist als die einer Gasfeder, sind die entsprechenden Verluste im Vergleich zu Gasfedern viel höher. Da ein Schlagvorgang, wie er bei den hier betrachteten Eintreibgeräten auftritt, zu einer sehr schnellen Entspannung der Feder führt, macht sich der beschriebene Umstand hier stark bemerkbar.

Ein gattungsgemässes Eintreibgerät ist aus der DE 40 13 022 A1 bekannt. Dieses Eintreibgerät weist eine durch eine Feder zu einer Mündung hin vorgestossene Schlagvorrichtung zum Einschlagen eines Nagels auf. Eine Stellvorrichtung zum Überführen der Schlagvorrichtung in eine Ausgangsstellung weist einen Elektromotor und einen Drehzahluntersetzungsmechanismus für diesen auf. Eine Drehbewegung des Elektromotors wird dabei über den Drehzahluntersetzungsmechanismus und eine diesen kämmende Zahnscheibe auf einen Hammerkörper der Schlagvorrichtung übertragen, um diesen gegen die Kraft der Feder in die Ausgangsstellung zu überführen, in der die Schlagvorrichtung bereit für einen Schlagvorgang ist.

Von Nachteil bei dem bekannten Eintreibgerät ist, dass die Stösselgeschwindigkeit einen Betrag von 15 bis 20 m/s nicht überschreiten kann, was für Anwendungen, die höhere Setzenergien als 10 bis 20 J benötigen, wie z. B. dem Setzen auf Stahl oder Beton nicht ausreichend ist. Dies resultiert aus dem oben angesprochenen Umstand, dass die mechanische Feder einen Teil der gespeicherten Energie zur Beschleunigung der eigenen Federmasse aufwenden muss, wodurch dieser Energieanteil für die Beschleunigung der Schlagvorrichtung verloren geht. Versucht man die Schlaggeschwindigkeit des Eintreibgeräts zu erhöhen, indem man eine baugleiche aber stärkere Feder vorsieht, erhöht man dadurch nur die Eigenmasse der Feder, was die beschriebene Verlustenergie zum Beschleunigen der Federeigenmasse erhöht, so dass man insgesamt keine Geschwindigkeitserhöhung erreicht.

Aus der US 6 708 585 B1 ist ein Gerät zum Eintreiben von kleinen Nägeln mit einem rohrförmigen Körper in dem ein Stössel versetzbar geführt ist bekannt. Das schlaufenförmige obere Ende des Stössels und der Körper sind über ein Gummiband miteinander verbunden. Vor einem Setzvorgang muss der Stössel manuell gegenüber dem Körper bewegt werden, wobei das Gummiband gespannt wird. Durch Loslassen des Stössels wird dieser in Eintreibrichtung bewegt und treibt mit seinem unteren Ende einen Nagel in ein Werkstück ein.

Die Aufgabe der vorliegenden Erfindung liegt daher darin, ein Eintreibgerät der vorgenannten Art zu entwickeln, das die vorgenannten Nachteile vermeidet und auf technisch einfache Weise eine höhere Eintreibgeschwindigkeit bei gleichzeitig hoher Eintreibenergie ermöglicht.

Diese Aufgabe wird erfindungsgemäss durch die in Anspruch 1 genannten Massnahmen gelöst. Demnach ist das Antriebsfederelement aus einem faserverstärkten Kunststoffmaterial gebildet. Das Antriebsfederelement besteht dabei aus mehreren Federsegmenten. Vorzugsweise sind die einzelnen Federsegmente dabei an ihren Berührungspunkten miteinander verbunden, z. B. durch Verkleben oder Verschweissen. Hierdurch kann die Masse bzw. das Eigengewicht des Antriebsfederelementes bei vergleichbarer Federkraft deutlich verringert und ferner die Steifigkeit und der Elastizitätsmodul des Federmaterials bei ca. gleichbleibendem Volumen bzw. Gewicht stark erhöht werden, sodass das Antriebsfederelement die für die oben angesprochenen Anwendungen mit höheren Setzenergien benötigten Federkräfte besser entwickeln kann. Energieverluste auf Grund der Federmasse können so reduziert und eine höhere Eintreibgeschwindigkeit von 30 bis 35 m/s sowie eine gleichzeitig höhere Setzenergie bei einem Eintreibvorgang erreicht werden. Im Vergleich zu einer mit einer herkömmlichen Metallschraubenfeder erreichbaren Eintreibgeschwindigkeit von max. ca. 20 m/s bedeutet dies eine deutliche Steigerung.

Eine derartiges Antriebsfederelement aus mehreren Federsegmenten hat ferner den Vorteil, dass es leicht und günstig herstellbar ist, da die einzelnen Federsegmente eine viel einfachere Geometrie aufweisen können als das gesamte Antriebsfederelement, wodurch sich die Herstellbarkeit der Einzelsegmente stark vereinfacht. Besonders vorteilhaft ist es, wenn alle Federsegmente einen identischen Aufbau besitzen, da dann die Herstellung besonders rationell durchgeführt werden kann.

Günstig ist es, wenn das Kunststoffmaterial des Antriebsfederelementes Fasern aus wenigstens einer der Gruppen der Glasfasern, Kohlefasern, keramischen Fasern, Aramidfasern oder Stahlfasern enthält.

Vorteilhafterweise weist das Kunststoffmaterial des Antriebsfederelementes eine Matrix aus einem thermoplastischen oder duroplastischen Kunststoff, also beispielsweise wenigstens einem Kunststoff der Gruppen der Polyamide, Polyetheretherketone, Polyester, Polycarbonate bzw. Polyesterharze oder Epoxidharze. Gegebenenfalls kann das Matrixmaterial auch aus einem Polyblend bestehen.

Von Vorteil ist es ferner, wenn die Fasern einen Anteil von 1 - 60 Vol % des Kunststoffmaterials bilden, da sich dann die Vorteile der Faserverstärkung hinsichtlich Erhöhung der Steifigkeit besonders vorteilhaft auswirken.

Günstig ist es ferner, wenn das Antriebsfederelement als Schraubenfeder ausgebildet ist, weil die Schraubenfeder eine ideale Geometrie für den Einbau in ein handgeführtes Gerät aufweist, da sie in Achsrichtung einen grossen Beschleunigungsweg ermöglicht und gleichzeitig quer zur Achsrichtung schmal und kompakt baut, wodurch eine kompakte Gesamtkonstruktion möglich wird, was für ein Handgerät besonders wichtig ist.

Weiterhin vorteilhaft ist es, wenn die Federsegmente z. B. aus einem flächigen Ring bestehen, der radial verlaufende, wellenförmige, federnde Erhebungen aufweist. So können die einzelnen Federsegmente einfach z. B. aus mehreren übereinander geschichteten und verpressten Lagen aus Fasermaterial und Matrixmaterial oder auch Prepreg-Matten hergestellt werden.

Natürlich sind beliebige andere Federsegmentgeometrien möglich. Die wesentliche Einschränkung hinsichtlich der Federsegmentgeometrie besteht nur darin, dass einerseits die durch die federnde Bewegung im Segment hervorgerufenen Spannungen von den Fasern, deren Faserlage durch das gewählte Herstellverfahren bestimmt wird, möglichst so aufgenommen werden müssen, dass die Fasern vorrangig auf Zug belastet werden und andererseits die Geometrie des Segments durch das gewählte Herstellverfahren einfach und rationell herstellbar sein muss. Die zuvor beschriebene wellringartige Federsegmentgeometrie erfüllt diese Forderung, indem sie einfach durch Pressen hergestellt werden kann und andererseits durch das Flachdrücken der Wellenberge im Federsegment Biegespannungen auftreten, die durch die in den verpressten Lagen verlaufenden Fasern in vorteilhafter Weise aufgenommen werden können.

Weitere Vorteile und Massnahmen der Erfindung ergeben sich aus den Unteransprüchen, der nachfolgenden Beschreibung und der Zeichnung. In den Zeichnungen ist die Erfindung in einem Ausführungsbeispiel dargestellt.

Es zeigen:
Fig. 1 ein erfindungsgemässes Eintreibgerät im Längsschnitt in seiner Ausgangsstellung,
Fig. 2 das Eintreibgerät aus Fig. 1 in einer betätigten Stellung,
Fig. 3 ein Segment des Antriebsfederelements gemäss dem Ausschnitt III aus Fig. 2,
Fig. 4 das Segment des Antriebsfederelements aus Fig. 3 in Seitenansicht.

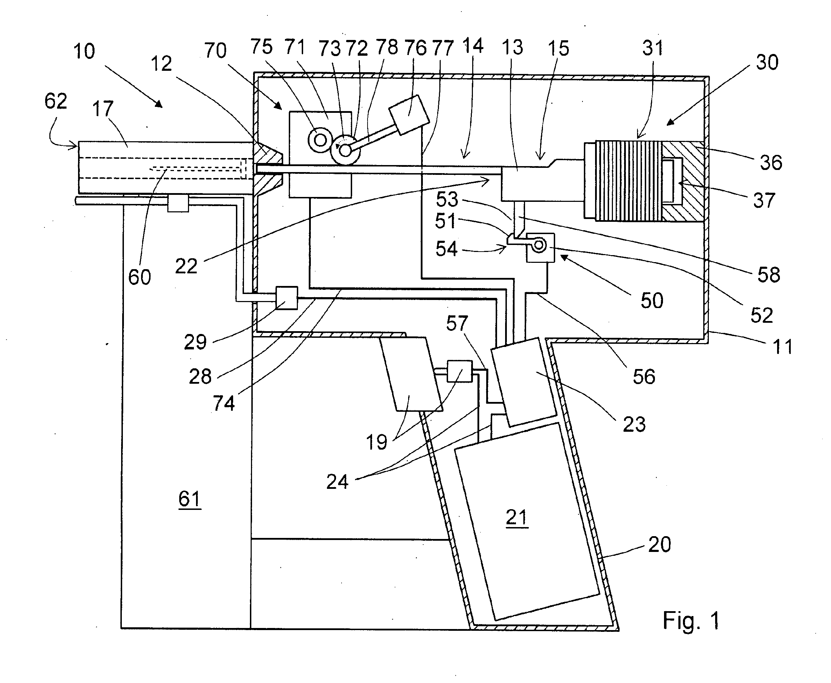

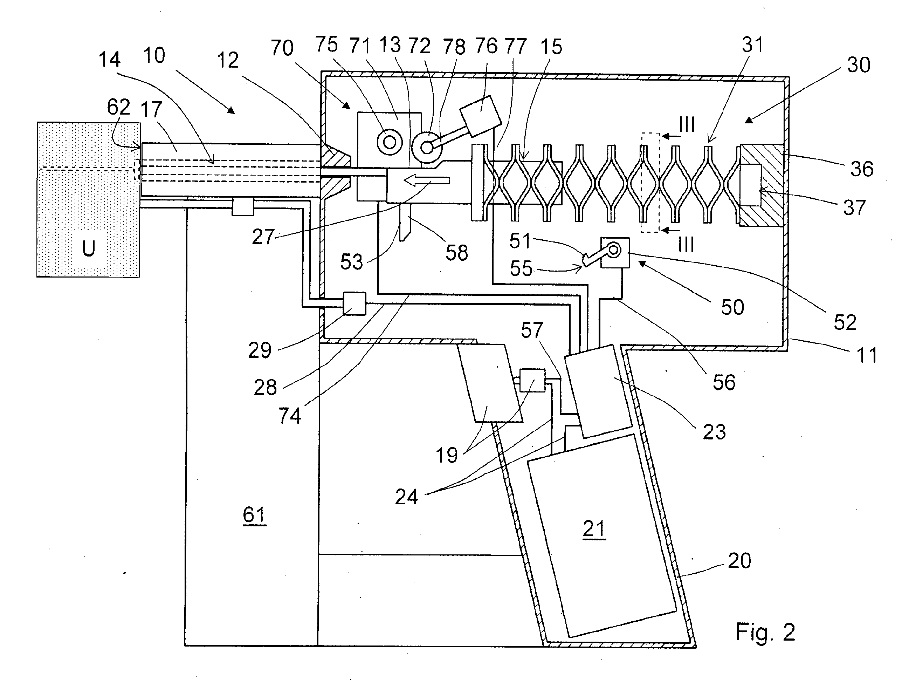

Das in den Figuren 1 und 2 dargestellte Eintreibgerät 10 weist ein Gehäuse 11 und eine darin angeordnete, insgesamt mit 30 bezeichnete Antriebsanordnung für einen Eintreibstössel 13 auf, der in einer Führung 12 versetzbar geführt ist. Der Eintreibstössel 13 weist dabei einen Eintreibabschnitt 14 für ein Befestigungselement 60 und einen Kopfabschnitt 15 auf.

An dem in Eintreibrichtung 27 liegenden Ende der Führung 12 schliesst sich eine koaxial zu dieser verlaufende Bolzenführung 17 an diese an. Seitlich von der Bolzenführung 17 abragend ist ein Befestigungselementemagazin 61 angeordnet in dem Befestigungselemente 60 bevorratet sind.

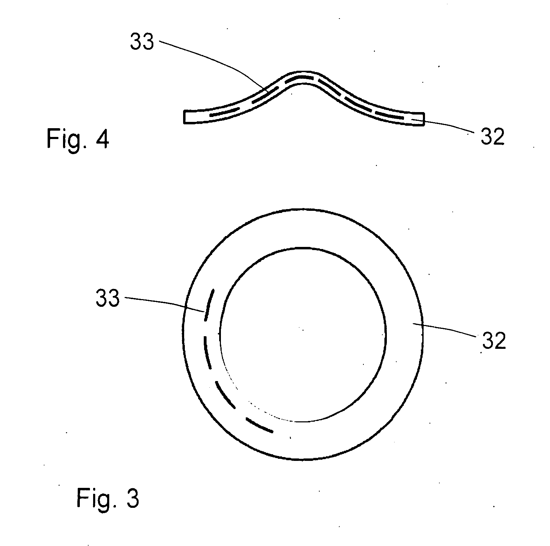

Die Antriebsanordnung 30 beinhaltet ein Antriebsfederelement 31 welches sich mit einem Ende an einer Abstützstelle 36 indirekt am Gehäuse 11 abstützt und welches mit einem anderen Ende an dem Kopfabschnitt 15 des Eintreibstössels 13 angreift. Wie insbesondere aus den Figuren 2 bis 4 ersichtlich ist, ist das Antriebsfederelement 31 als Compositefeder aus mehreren blattförmigen, runden Federsegmenten 32 gebildet, die aus einem faserverstärkten Kunststoffmaterial bestehen. Die Federsegmente 32 können an ihren Berührungspunkten miteinander verschweisst oder verklebt sein. Das Antriebsfederelement 31 weist insgesamt eine zylindrische Form auf. In dem aus den Figuren 2 und 4 ersichtlichen entspannten Zustand des Federelementes 31 bzw. der Federsegmente 32 weisen die einzelnen Federsegmente 32 eine wellenförmige Form auf. Das Kunststoffmaterial ist ein thermoplastischer oder duroplastischer Kunststoff, wie z. B. Polyamid, Polyetherketone, Polyester, ein Polycarbonat bzw. ein Polyester- oder Epoxidharz, in den Glas- oder Kohlefasern 33 (als Endlosfasern oder Prepreg-Matten) eingebettet sind. Es könnten z. B. aber auch keramische Fasern, Aramidfasern oder Stahlfasern in diesen eingebettet sein. Die Fasern 33 machen dabei einen Anteil von ca. 1 bis 60 Vol. %, vorzugsweise von ca. 40 bis 60 Vol.%, des Kunststoffmaterials aus. In den Figuren 3 und 4 ist der ungefähre Verlauf der Kunststofffasern 33 in den einzelnen Federsegmenten 32 ausschnittsweise durch gestrichelte Linien angedeutet. Die Blattform der einzelnen Federsegmente ist bei der Herstellung des Antriebsfederelementes 31 von Vorteil, da die einzelnen Federsegmente 32 in Wellringform aus einem Kunststoffflachmaterial herstellbar sind, das z. B. durch Pressen und Stanzen in die Wellringform gebracht wird. In das Kunststoffflachmaterial lassen sich die Fasern auf einfache Weise in Lagenform einbringen.

In der aus Fig. 1 ersichtlichen Ausgangsstellung 22 des Eintreibstössels 13 ist dieser elastisch gegen das Antriebsfedermittel 31 vorgespannt, und ist mit dem freien Ende seines Kopfabschnitts 15 in einen zylindrischen Führungsraum 37 eingetaucht, der durch das Antriebsfederelement 31 und die Abstützstelle 36 definiert wird. Durch die Möglichkeit den Kopfabschnitt 15 in den Führungsraum 37 innerhalb dieser Elemente und insbesondere innerhalb des Antriebsfederelementes 31 zu führen wird vorteilhaft eine kompakte Bauweise erzielt.

In der Ausgangsstellung 22 ist der Eintreibstössel 13 durch eine insgesamt mit 50 bezeichnete Sperreinrichtung gehalten, die eine Klinke 51 aufweist, die in einer Sperrstellung 54 (siehe Fig. 1) an einer Sperrfläche 53 an einem Vorsprung 58 des Eintreibstössels 13 angreift und diesen gegen die Kraft des Antriebsfedermittels 31 festhält. Die Klinke 51 ist dabei an einem Stellmotor 52 gelagert und über diesen in eine aus Fig. 2 ersichtliche Freigabestellung 55 überführbar, wie nachfolgend noch beschrieben wird. Der Stellmotor 52 ist über eine elektrische erste Steuerleitung 56 mit einer Steuereinheit 23 verbunden.

Das Eintreibgerät 10 weist ferner noch einen Handgriff 20 auf, an dem ein Auslöseschalter 19 zum Auslösen eines Eintreibvorganges mit dem Eintreibgerät 10 angeordnet ist. In dem Handgriff 20 ist ferner noch eine insgesamt mit 21 bezeichnete Stromversorgung angeordnet, über die das Eintreibgerät 10 mit elektrischer Energie versorgt wird. Vorliegend beinhaltet die Stromversorgung 21 wenigstens einen Akkumulator. Die Stromversorgung 21 ist über elektrische Versorgungsleitungen 24 sowohl mit der Steuereinheit 23 als auch mit dem Auslöseschalter 19 verbunden. Die Steuereinheit 23 ist dabei ferner noch über eine Schalterleitung 57 mit dem Auslöseschalter 19 verbunden.

An einer Mündung 62 des Eintreibgerätes 10 ist ein Schaltmittel 29 angeordnet, das über eine Schaltmittelleitung 28 elektrisch mit der Steuereinheit 23 verbunden ist. Das Schaltmittel 29 sendet ein elektrisches Signal an die Steuereinheit 23, sobald das Eintreibgerät 10 an einen Untergrund U angedrückt wird, wie aus Fig. 2 ersichtlich ist, und stellt so sicher, dass das Eintreibgerät 10 nur ausgelöst werden kann, wenn es ordnungsgemäss an ein Werkstück U angedrückt worden ist.

An dem Eintreibgerät 10 ist ferner noch eine insgesamt mit 70 bezeichnete Spanneinrichtung angeordnet. Diese Spanneinrichtung 70 umfasst einen Motor 71 über den eine Antriebsrolle 72 antreibbar ist. Der Motor 71 ist über eine zweite Steuerleitung 74 elektrisch mit der Steuereinheit 23 verbunden und kann über diese in Betrieb gesetzt werden, z. B. wenn sich der Eintreibstössel 13 in seiner in Eintreibrichtung 27 liegenden Endposition befindet oder wenn das Eintreibgerät wieder vom Untergrund abgehoben wird. Der Motor 71 weist ein Abtriebsmittel 75, wie ein Abtriebsrad, auf, das mit der Antriebsrolle 72 koppelbar ist. Die Antriebsrolle 72 ist dazu drehbar an einem längsverstellbaren Stellarm 78 eines als Solenoid ausgebildeten Stellmittels 76 gelagert. Das Stellmittel 76 ist dabei über eine Stellmittelleitung 77 mit der Steuereinheit 23 verbunden. Im Betrieb dreht sich die Antriebsrolle 72 in Richtung des gestrichelt angedeuteten Pfeils 73.

Wird das Eintreibgerät 10 über einen hier nicht dargestellten Hauptschalter in Betrieb genommen, dann stellt die Steuereinheit 23 zunächst sicher, dass sich der Eintreibstössel 13 in seiner aus Fig. 1 ersichtlichen Ausgangsstellung 22 befindet. Ist dieses nicht der Fall, dann wird die Antriebsrolle 72 vom Stellmittel 76 an das bereits über den Motor 71 in Drehung versetzte Abtriebsmittel 75 heranbewegt und mit diesem eingekuppelt. Gleichzeitig kuppelt die Antriebsrolle 72 an dem Eintreibstössel 13 ein, so dass dieser über die sich in Richtung des Pfeils 73 drehende Antriebsrolle 72 in Richtung zur Antriebsanordnung 30 hin versetzt wird. Dabei wird das Antriebsfederelement 31 der Antriebsanordnung 30 gespannt. Hat der Eintreibstössel 13 seine Ausgangsstellung 22 erreicht, dann fällt die Klinke 51 der Sperreinrichtung 50 in die Sperrfläche 53 am Eintreibstössel 13 ein und hält diesen in der Ausgangsstellung 22. Der Motor 71 kann dann über die Steuereinheit 23 abgeschaltet werden und das Stellmittel 76 fährt die Antriebsrolle 72, ebenfalls gesteuert von der Steuereinheit 23, von ihrer eingekuppelten Stellung an dem Abtriebsmittel 75 und dem Eintreibstössel 13 in seine ausgekuppelte Stellung (vgl. Fig. 2).

Wird das Eintreibgerät 10 an ein Werkstück U angedrückt, wie aus Fig. 2 ersichtlich ist, dann wird zunächst über das Schaltmittel 29 die Steuereinheit 23 in Setzbereitschaft versetzt. Wird dann der Auslöseschalter 19 von einem Bediener betätigt, dann wird über die Steuereinheit 23 die Sperreinrichtung 50 in ihre Freigabestellung 55 versetzt, wobei die Klinke 51 über den Stellmotor 52 von der Sperrfläche 53 am Eintreibstössel 13 abgehoben wird. Die Klinke 51 kann dazu in Richtung auf den Eintreibstössel 13 federbelastet sein.

Der Eintreibstössel 13 wird daraufhin über das Antriebsfederelement 31 der Antriebsanordnung 30 in Eintreibrichtung 27 bewegt, wobei ein Befestigungselement 60 in das Werkstück U eingetrieben wird.

Zur Rückführung des Eintreibstössels 13 und zum Spannen des Antriebsfederelementes 31 wird, am Ende eines Eintreibvorganges die Spanneinrichtung 70 über die Steuereinheit 23 aktiviert, wenn das Eintreibgerät 10 wieder vom Werkstück U abgehoben wird. Das Schaltmittel 29 liefert dazu ein Signal an die Steuereinheit 23. Über die Spanneinrichtung 70 wird der Eintreibstössel 13 in der bereits beschriebenen Weise gegen das Antriebsfederelement 31 der Antriebsanordnung 30 gefahren und das Antriebsfederelement 31 dabei erneut gespannt, bis die Klinke 51 wieder in ihre Sperrstellung 54 an der Sperrfläche 53 am Eintreibstössel 13 einfallen kann.

## Patentansprüche

1. Handgeführtes Eintreibgerät für Befestigungselemente, mit einer Antriebsanordnung (30) für einen in einer Führung (12) versetzbar gelagerten Eintreibstössel (13), die wenigstens ein über eine Spanneinrichtung (70) spannbares Antriebsfederelement (31) für den Eintreibstössel (13) aufweist,
**dadurch gekennzeichnet,**
**dass** das Antriebsfederelement (31) aus einem faserverstärkten Kunststoffmaterial gebildet ist und dass das Antriebsfederelement (31) aus mehreren miteinander verbundenen Federsegmenten (32) besteht.

2. Eintreibgerät nach Anspruch 1, **dadurch gekennzeichnet, dass** das Kunststoffmaterial des Antriebsfederelementes (31) Fasern aus wenigstens einer der Gruppen der:
- Glasfasern
- Kohlefasern
- Aramidfasern
- Stahlfasern
- Keramikfasern
enthält.

3. Eintreibgerät nach Anspruch 1 oder 2, **dadurch gekennzeichnet, dass** das Kunststoffmaterial des Antriebsfederelementes (31) eine Matrix aus wenigstens einem thermoplastischen oder duroplastischen Kunststoff der Gruppen der:
- Polyamide
- Polyetheretherketone
- Polyester
- Polycarbonate
- Polyesterharze
- Epoxidharze
aufweist.

4. Eintreibgerät nach einem der Ansprüche 1 bis 3, **dadurch gekennzeichnet, dass** die Fasern einen Anteil von 1-60 Vol % des Kunststoffmaterials bilden.

5. eintreibgerät nach Anspruch 1, **dadurch gekennzeichnet, dass** die Federsegmente (32) wellenförmig sind und aus einem Kunststoffflachmaterial bestehen.

## Claims

1. A hand-operated setting tool for driving in fasteners, comprising a drive assembly (30) for an impacting rod (13) displaceably carried in a guide (12), said drive assembly (30) having at least one drive spring element (31), which can be tensioned by a tensioning device (70), for the impacting rod (13),
**characterized in that**
the drive spring element (31) is made of a fibre-reinforced plastic material, and **in that** the drive spring element (31) comprises a plurality of spring segments (32) joined together.

2. A setting tool according to Claim 1, **characterized in that** the plastic material of the drive spring element (31) contains fibres from at least one of the following groups:
- glass fibres
- carbon fibres
- aramide fibres
- steel fibres
- ceramic fibres.

3. A setting tool according to Claim 1 or 2, **characterized in that** the plastic material of the drive spring element (31) comprises a matrix of at least one thermoplastic or duroplastic material from the following groups:
- polyamides
- polyetheretherketones
- polyesters
- polycarbonates
- polyester resins
- epoxy resins.

4. A setting tool according to one of Claims 1 to 3, **characterized in that** the fibres make up 1 - 60 % by volume of the plastic material.

5. A setting tool according to Claim 1, **characterized in that** the spring segments (32) have an undulating shape and are made of a flat plastic material.

## Revendications

1. Dispositif d'enfoncement manuel pour éléments de fixation, avec un moyen d'entraînement (30) pour un coulisseau d'enfoncement (13) déplaçable dans un guidage (12), lequel moyen présente au moins un ressort d'entraînement (31), pouvant être mis sous tension par un dispositif de mise sous tension (70), pour le coulisseau d'enfoncement (13),
**caractérisé en ce que**
le ressort d'entraînement (31) est formé d'une matière plastique renforcée par des fibres et
le ressort d'entraînement (31) est constitué de plusieurs segments de ressort (32) reliés entre eux.

2. Dispositif d'enfoncement selon la revendication 1, **caractérisé en ce que** la matière plastique du ressort d'entraînement (31) contient des fibres d'au moins un des groupes des :
- fibres de verre
- fibres de charbon
- fibres d'aramide
- fibre d'acier
- fibres de céramique.

3. Dispositif d'enfoncement selon la revendication 1 ou 2, **caractérisé en ce que** la matière plastique du ressort d'entraînement (31) présente une matrice formée d'au moins un plastique thermoplastique ou thermodurcissable des groupes des :
- polyamides
- polyétheréthercétones
- polyesters
- polycarbonates
- résines de polyester
- résines époxy.

4. Dispositif d'enfoncement selon l'une quelconque des revendications 1 à 3, **caractérisé en ce que** les fibres forment une part de 1 à 60 % en vol. de la matière plastique.

5. Dispositif d'enfoncement selon la revendication 1, **caractérisé en ce que** les segments de ressort (32) sont ondulés et se composent d'un matériau plat en matière plastique.
